# EUROPEAN PATENT SPECIFICATION

(11) **EP 4 368 504 B1**
(45) Date of publication and mention of the grant of the patent: **21.10.2026**
(21) Application number: 23209861.6
(22) Date of filing: 14.11.2023
(51) Int. Cl.: B64C 27/26, B64C 29/00, B64D 27/30, B64U 10/16, B64U 10/25, B64U 20/00

(54) **AIRCRAFT SUPPORT ARM**
FLUGZEUGTRAGARM
BRAS DE SUPPORT D'AÉRONEF

(30) Priority: 14.11.2022 US 202263383522 P; 19.09.2023 CN 202311204664
(43) Date of publication of application: 15.05.2024
(73) Proprietor: Autoflight (Kunshan) Co., Ltd., Kunshan, Jiangsu 215345 (CN)
(72) Inventor: TIAN, Yu, Shanghai, 201500 (CN)
(74) Representative: MERH-IP Matias Erny Reichl Hoffmann Patentanwälte PartG mbB

(56) References cited:
- EP-A1- 3 617 069
- WO-A1-2021/118363
- US-A1- 2019 031 361
- US-A1- 2019 337 614
- US-A1- 2020 307 814
- US-A1- 2020 391 862

## Description

### FIELD OF THE DISCLOSURE

The present disclosure relates to an aircraft and, more particularly, an aircraft and a support arm.

### BACKGROUND OF THE INVENTION

Generally, an eVTOL (electric vertical takeoff and landing) aircraft is an aircraft having vertical lift motors and propellers.

There is a continuing need for new structural designs to improve the efficiency of these lift motors.

The disclosed embodiments may seek to satisfy one or more of the above-mentioned needs. Although the present embodiments may obviate one or more of the above-mentioned needs, it should be understood that some aspects of the embodiments might not necessarily obviate them. US 2020/ 391 862 A1 relates to a tiltrotor aircraft having a vertical takeoff and landing (VTOL) flight mode and a forward flight mode, which includes tiltable rotors located at forward boom ends, tiltable ducted fans located at wings aft of the forward boom ends, and aft rotors coupled to a top side of the aft portion of the respective boom, which are formed with a low coefficient of drag. US 2020/ 307 814 A1 relates to a quadrocopter, which comprises a frame and droplet-shaped arms, wherein an installing component and a mounting component are mounted on two respective ends of the arms, whereby the frame is connected to a driving rotor/motor by the arms. WO 2021/ 118 363 A1 relates to quadrocopter comprising support arms for interconnecting motors, wherein the support arms are configured for supporting the battery modules, such that each battery module forms a structural element of the respective support arm.

### SUMMARY OF THE INVENTION

The purpose of this disclosure is to provide an aircraft and an aircraft support arm. The streamlined structure of the support arm's cross section can include an inverted teardrop shape which can or cannot reduce the eddy currents formed by the propeller's downwash to the support arm housing. By reducing the eddy currents, the wear and tear on the lift motor can be reduced. Additionally, or alternatively, by reducing the eddy currents, lift motor efficiency can improve.

In order to solve the above technical problems, the present disclosure provides an aircraft arm (i.e., the support arm), having the features defined in claim 1.

This disclosure also provides an aircraft having the above-mentioned aircraft support arm as defined in claim 6.

Further preferred embodiments are defined in the dependent claims.

The streamlined structure of the inverted drop-shaped arm section of the invention can reduce the eddy currents formed by the propeller downwash flow due to interference by the support arm housing, thereby reducing the wear and tear of the lift motor and increasing the efficiency of the lift motor.

Certain features that are described in this specification in the context of separate implementations can also be implemented in combination in a single implementation. Conversely, various features that are described in the context of a single implementation can also be implemented in multiple implementations separately or in any suitable subcombination.

The details of one or more implementations of the subject matter described in this disclosure are set forth in the accompanying drawings and the description below. Other features, aspects, and advantages of the subject matter will become apparent from the description, the drawings, and the claims.

### BRIEF DESCRIPTION OF DRAWINGS

It should be noted that the figures may be in simplified form and might not be to precise scale. In reference to the disclosure herein, for purposes of convenience and clarity only, directional terms such as top, bottom, left, right, up, down, over, above, below, beneath, rear, front, distal, and proximal are used with respect to the accompanying drawings. Such directional terms should not be construed to limit the scope of the embodiment in any manner.
Figure 1 shows a schematic structural diagram of an aircraft support arm according to one embodiment of the present invention;
Figure 2 shows a schematic cross-sectional structural diagram of an aircraft support arm according to one embodiment of the present invention;
Figure 3 shows an enlarged partial view of A in Figure 1;
Figure 4 shows a schematic structural diagram of a rotor motor (i.e., lift motor) according to an embodiment of the present invention;
Figure 5 shows a schematic structural diagram of an aircraft according to an embodiment of the present invention.

### DETAILED DESCRIPTION

The following embodiments further illustrate the technical solution of the present invention. It is to be understood that the specific embodiments described herein are merely for explanation of the present invention. It should also be noted that, for convenience of description, only some but not all parts relevant to the present invention are shown in the drawings.

It should be noted that, unless otherwise clearly stated and limited, the terms "installation", "connection" and "connected" should be understood in a broad sense. For example, it can be a fixed connection or a detachable connection. It can be a mechanical connection or an electrical connection; it can be a direct connection or an indirect connection through an intermediate medium; it can be an internal connection between two components. For those of ordinary skill in the art, the specific meanings of the above terms in this invention can be understood on a case-by-case basis.

In this invention, unless otherwise explicitly stated and limited, the term "above" or "below" a first feature to a second feature may include direct contact between the first and second features or may also include the first and second features. Not in direct contact but through additional characteristic contact between them. Furthermore, the terms "above", and "on top of" a first feature on a second feature include the first feature being directly above and diagonally above the second feature, or simply mean that the first feature is higher in level than the second feature. "Below", and "under" the first feature is the second feature includes the first feature being directly below and diagonally below the second feature, or simply means that the first feature is less horizontally than the second feature.

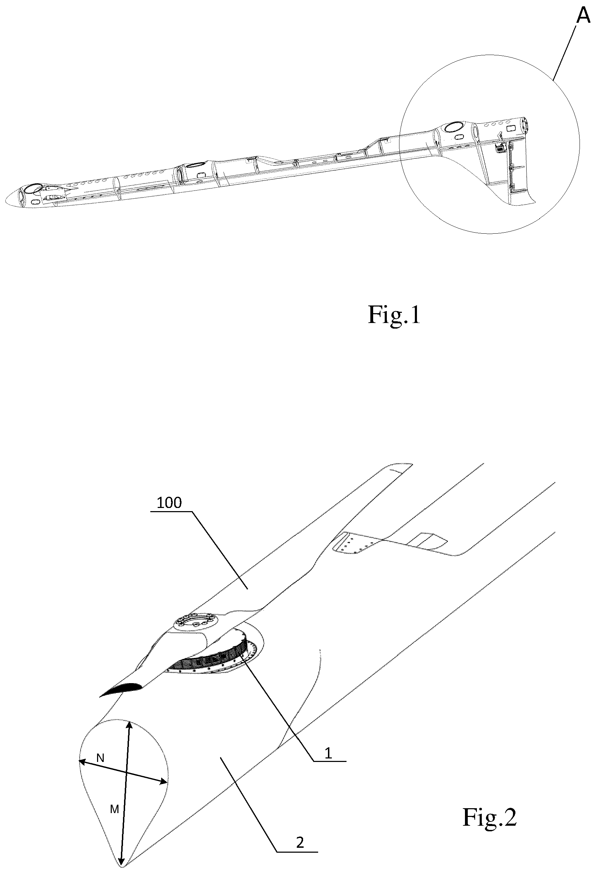

The following describes embodiments of the present invention with reference to the accompanying drawings. As shown in Figures 1 and 2, the aircraft arm of the embodiment of the present invention includes: a rotor motor 1 and an arm housing 2. The rotor motor 1 is connected to a propeller 100; the rotor motor 1 can be arranged inside the arm housing 2 and can partially extend out of the arm housing 2. The rotor motor 1 is connected to the propeller 100, and at least part of the arm housing 2 has an inverted teardrop-shaped cross-sectional shape.

In one embodiment, at least a section directly underneath a rotational area of the propeller 100 has the inverted teardrop shape.

In another embodiment, the teardrop shape is disposed along a substantial length of the support arm. In yet another embodiment, the teardrop shape is disposed along at least 80% of the entire length of the support arm. In still another embodiment, the teardrop shape is disposed along at least 50% of the entire length of the support arm.

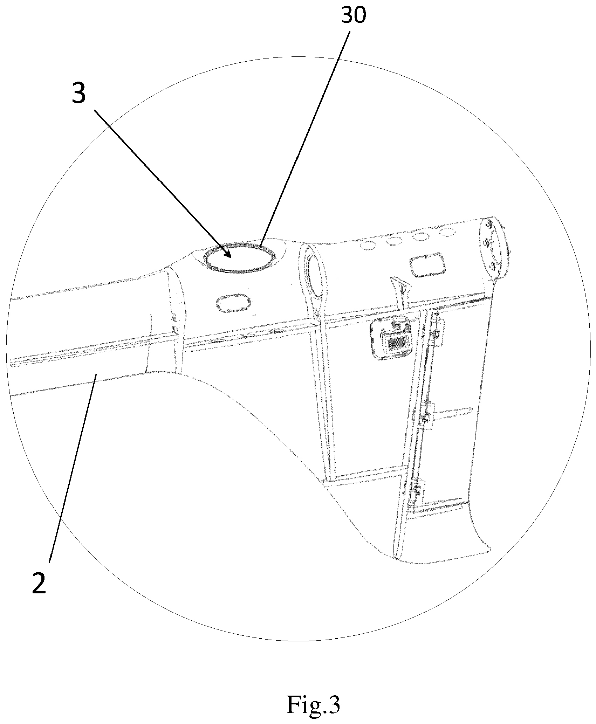

Specifically, as shown in FIG. 3, the aircraft arm includes an arm opening 3, which is internally connected to the arm body 2. The rotor motor 1 passes through the arm opening 3 and is seated inside the arm body 2. The arm body 2 is preferably made of carbon fiber material, which is beneficial to the lightweight design of the aircraft. As shown in Figure 2, the cross-section of the support arm body 2 presents an inverted teardrop-shaped structure that gradually shrinks from top to bottom. The teardrop-shaped structure includes a height M and a width N. The ratio of M and N is designed to be including 1.5 to including 2. After testing, this ratio of the teardrop-shaped structure underneath the propeller can effectively reduce the eddy currents formed when the propeller downwash is interfered by the arm housing, thereby reducing the wear and tear of the rotor motor and increasing the efficiency of the rotor motor. Preferably, the ratio of the arm sections M and N on both sides of the arm opening 3 is 1.65. The downwash flow on both sides of the arm opening 3 is the largest. Setting the ratio of M to N to 1.65 can minimize the formation of vortices in the propeller downwash flow caused by interference from the arm housing.

In other embodiments, the teardrop shape can be replaced by an almond shape having a pointy top and a pointy bottom.

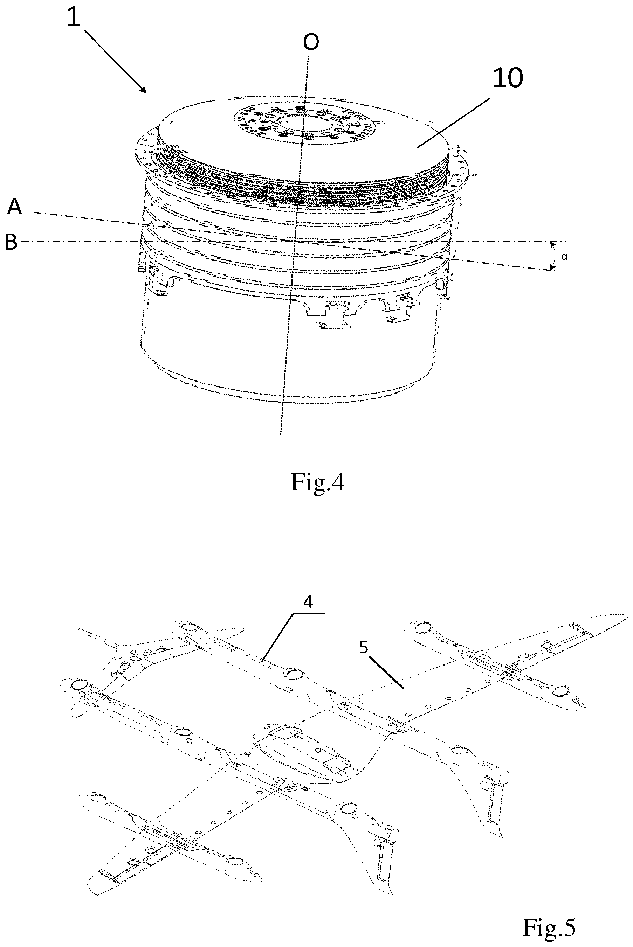

Further, as shown in Figures 3 and 4, the port of the arm opening 3 is provided with an outwardly expanding bowl mouth structure. In this embodiment, the rotor motor 1 is partially disposed inside the arm housing 2. The rotor motor 1 has an internal centrifugal fan 10 hidden under a cover, where the cover has side vents thereby allowing the centrifugal fan 10 to ventilate the rotor motor 1. The fan 10 is disposed within the bowl structure of the support arm opening 3 and yet it is exposed outside the arm housing. By such design, the fan 10 is not exposed to the windward airflow on the surface of the arm housing 2, thereby ensuring the streamlined, aerodynamic shape of the arm housing 2 without creating resistance. At the same time, the centrifugal fan 10 is exposed to the exterior of the arm housing, thereby facilitate better ventilation.

Further, as shown in Figures 3 and 4, the plane where the edge 30 of the arm opening 3 is located is parallel to the first plane A, and the transverse plane of the aircraft arm is parallel to the second plane B (that is, the horizontal plane where the aircraft arm is located), the deviation angle α between the first plane A and the second plane B is including and between 3 to 10 degrees. Multiple rotor motors of an aircraft can have multiple deviation angles and the rotor motors can be of different sizes from each other. By such arrangements, these different deviation angles of each rotor motor can facilitate flight control of the aircraft.

Further, as shown in FIG. 3, the plane where the edge portion 30 of the arm opening 3 is located is higher than the arm body 2 on both sides of the arm opening 3. The edge portion 30 is raised to a certain extent, so that the motor 1 and the propeller 100 are raised correspondingly, thereby preventing the propeller 100 from interfering with the aircraft arm due to the inevitable up and down amplitude during rotation.

The streamlined structure of the inverted drop-shaped arm section of the invention can reduce the eddy currents formed by the propeller downwash flow due to interference by the aircraft body, thereby reducing the loss of the lift motor and increasing the efficiency of the lift motor.

This invention also provides an aircraft, as shown in Figure 5, including the above-mentioned aircraft arm 4 and a wing 5. The streamlined structure of the support arm cross-section of this invention can reduce the eddy currents formed by the propeller downwash flow in interference with the arm housing and/or the wing 5, thereby reducing the wear and tear of the rotor motor and increasing the efficiency of the rotor motor.

Thus, specific embodiments and applications of an aircraft support arm have been disclosed. It should be apparent, however, to those skilled in the art that many more modifications besides those already described are possible without departing from the scope of the claims.

## Claims

1. A support arm for an aircraft, said support arm comprising:
a support arm housing (2)
a lift motor (1) partially disposed within said support arm housing (2);
a propeller (100) connected to said lift motor (1);
wherein a section of the support arm housing (2) has a cross-sectional shape of an inverted teardrop,
the support arm further comprising an opening (3) disposed on the support arm housing (2) connecting an interior of the support arm housing (2) to an ambient environment, said lift motor (1) is disposed in close proximity to the opening (3),
**characterized in that** the opening (3) includes an inverted frusto-conical shape rim,
the lift motor (1) comprises an internal centrifugal fan (10) hidden under a cover, the cover has side vents allowing the centrifugal fan (10) to ventilate the lift motor (1), and **in that** the centrifugal fan (10) is disposed within the rim of the opening (3) and is exposed outside the support arm housing (2).

2. The support arm as recited in claim 1, wherein said inverted teardrop has a height and a width, and wherein the ratio of the height vs. the width is between including 1.5 and including 2.0.

3. The support arm as recited in claim 1, wherein said inverted teardrop has a height and a width, and wherein the ratio of the height vs. the width is between including 1.5 and including 2.0

4. The support arm as recited in claim 3, wherein the ratio of the height vs. the width is 1.65.

5. The support arm as recited in any of claims 1 to 4, wherein the support arm housing (2) includes a carbon fiber material.

6. An aircraft **characterized by** having the support arm (4) as recited in any of claims 1-5.

## Patentansprüche

1. Tragarm für ein Luftfahrzeug, wobei der Tragarm Folgendes umfasst:
ein Tragarmgehäuse (2);
einen Hubmotor (1), der teilweise im Tragarmgehäuse (2) angeordnet ist;
einen Propeller (100), der mit dem Hubmotor (1) verbunden ist;
wobei ein Abschnitt des Tragarmgehäuses (2) die Querschnittsform eines umgekehrten Tropfens aufweist,
wobei der Tragarm ferner eine Öffnung (3) aufweist, die in dem Tragarmgehäuse (2) angeordnet ist und einen Innenraum des Tragarmgehäuses (2) mit einer Umgebung verbindet, wobei der Hubmotor (1) in enger räumlicher Nähe zur Öffnung (3) angeordnet ist,
**dadurch gekennzeichnet, dass** die Öffnung (3) einen Kranz mit einer umgekehrten Kegelstumpfform aufweist,
der Hubmotor (1) einen inneren Zentrifugallüfter (10) umfasst, der unter einer Abdeckung verborgen ist, und die Abdeckung Seitenlüftungsöffnungen aufweist, die ermöglichen, dass der Zentrifugallüfter (10) den Hubmotor (1) belüftet,
und dass der Zentrifugallüfter (10) im Kranz der Öffnung (3) angeordnet ist und nach außerhalb des Tragarmgehäuses (2) freiliegt.

2. Tragarm nach Anspruch 1, wobei der umgekehrte Tropfen eine Höhe und eine Breite aufweist und wobei das Verhältnis der Höhe zur Breite im Bereich von einschließlich 1,5 bis einschließlich 2,0 liegt.

3. Tragarm nach Anspruch 1, wobei der umgekehrte Tropfen eine Höhe und eine Breite aufweist und wobei das Verhältnis der Höhe zur Breite im Bereich von einschließlich 1,5 bis einschließlich 2,0 liegt.

4. Tragarm nach Anspruch 3, wobei das Verhältnis der Höhe zur Breite 1,65 ist.

5. Tragarm nach einem der Ansprüche 1 bis 4, wobei das Tragarmgehäuse (2) ein Karbonfasermaterial enthält.

6. Luftfahrzeug, **dadurch gekennzeichnet, dass** es den Tragarm (4) nach einem der Ansprüche 1-5 besitzt.

## Revendications

1. Bras de support pour un aéronef, ledit bras de support comprenant :
un logement de bras de support (2) ;
un moteur de levage (1) disposé partiellement à l'intérieur dudit logement de bras de support (2) ;
une hélice (100) connectée audit moteur de levage (1) ;
dans lequel une section du logement de bras de support (2) présente une forme en section transversale de goutte d'eau inversée,
le bras de support comprenant en outre une ouverture (3) disposée sur le logement de bras de support (2) connectant un intérieur du logement de bras de support (2) à un environnement ambiant, ledit moteur de levage (1) étant disposé à proximité proche de l'ouverture (3),
**caractérisé en ce que** l'ouverture (3) inclut un bord de forme tronconique inversée,
le moteur de levage (1) comprend un ventilateur centrifuge interne (10) caché sous une couverture, la couverture présentant des évents latéraux permettant au ventilateur centrifuge (10) de ventiler le moteur de levage (1), et **en ce que** le ventilateur centrifuge (10) est disposé à l'intérieur du bord de l'ouverture (3) et est exposé à l'extérieur du logement de bras de support (2).

2. Bras de support selon la revendication 1, dans lequel ladite goutte d'eau inversée présente une hauteur et une largeur, et dans lequel le rapport de la hauteur sur la largeur est entre 1,5 inclus et 2,0 inclus.

3. Bras de support selon la revendication 1, dans lequel ladite goutte d'eau inversée présente une hauteur et une largeur, et dans lequel le rapport de la hauteur sur la largeur est entre 1,5 inclus et 2,0 inclus.

4. Bras de support selon la revendication 3, dans lequel le rapport de la hauteur sur la largeur est de 1,65.

5. Bras de support selon l'une quelconque des revendications 1 à 4, dans lequel le logement de bras de support (2) inclut un matériau en fibres de carbone.

6. Aéronef **caractérisé en ce qu'**il présente le bras de support (4) selon l'une quelconque des revendications 1 à 5.
